# FASCICULE DE BREVET EUROPEEN

(11) **EP 2 770 437 B1**
(45) Date de publication et mention de la délivrance du brevet: **01.08.2018**
(21) Numéro de dépôt: 14156723.0
(22) Date de dépôt: 26.02.2014
(51) Int. Cl.: G06F 11/30

(54) **Procédé de relevé de consommation électrique pour carte électronique**
Verfahren zum Messen eines Energieaufwands einer Leiterplatte
Method for measuring power consumption on an electronic board.

(30) Priorité: 26.02.2013 FR 1351663
(43) Date de publication de la demande: 27.08.2014
(73) Titulaire: BULL SAS, 78340 Les Clayes sous Bois (FR)
(72) Inventeur: Musseta, Marie-Elsa, 75020 Paris (FR)
(74) Mandataire: Camus, Olivier Jean-Claude

(56) Documents cités:
- CA-A1- 2 388 078
- US-B1- 7 673 290
- Dell ET AL: "Power and Cooling Reprinted from Dell Power Solutions EnhancEd PowEr Monitoring for dEll PowErEdgE SErvErS Related Categories", , 2008, XP055090578, Extrait de l'Internet: URL:http://www.dell.com/downloads/global/p ower/ps3q08-20080174-Bhadri.pdf [extrait le 2013-11-27]

## Description

### DOMAINE TECHNIQUE DE L'INVENTION

L'invention se rapporte au suivi de la consommation d'énergie électrique par des processeurs, des barrettes mémoires, et globalement par chacun des composants d'un ordinateur.

On entendra par ordinateur, dans le cadre de la présente invention, tout dispositif usuellement désigné comme serveur, serveur lame, ordinateur personnel, station de travail, ordinateur portable... La liste n'est pas exhaustive. Sont cependant plus particulièrement visés les serveurs montables sur bâtis tels ceux que l'on trouve dans les centres de calcul intensif ou ferme/grappe de serveurs. Sont également visés les serveurs ou dispositifs comportant plusieurs lames de calcul.

On entendra par lame de calcul, dans le cadre de la présente invention, une carte à circuit imprimé comportant au moins un microprocesseur apte à être inséré dans un serveur lui-même montable sur bâti.

### ETAT DE LA TECHNIQUE ANTERIEURE

Dans l'état de la technique, le suivi de consommation d'énergie est réalisé « sous OS ». OS est l'acronyme reconnu pour Operating System, c'est-à-dire système d'exploitation. Cela signifie que pour connaître la consommation électrique d'un composant, par exemple un microprocesseur, on interroge ledit composant pour accéder à ses registres internes comportant l'information souhaitée. L'inconvénient de cette méthode est qu'elle interrompt, et même sollicite, le microprocesseur. Dans la mesure où l'on souhaite de plus avoir des mesures fines et précises, par exemple avec une période allant de 100 à 300 ms, la sollicitation du microprocesseur devient significative par sa fréquence.

De plus en cas de surveillance de plusieurs composants, on souhaite avoir des mesures temporellement cohérentes pour les différents composants. Avec les solutions de l'état de la technique, « sous OS » les interrogations de deux composants distincts peuvent être séparées de plusieurs ms. Cela, entre autre, parce que l'OS et/ou le composant, a mieux à faire que de répondre à une demande de lecture de registre. Quelques millisecondes représentent, du point de vue d'un microprocesseur, des millions de cycles, ou au minimum, des centaines de milliers de cycles, donc une consommation électrique significative.

Ainsi entre la mesure de la puissance consommée par le premier composant et la mesure de puissance consommée par le deuxième composant il s'est écoulé suffisamment de temps pour que le fait d'additionner les deux puissances mesurées ne correspondent à rien, et surtout pas à une puissance instantanée à un moment donné. US 7673290-B1 décrit une méthode de configuration d'un module de gestion à utiliser dans des opérations de surveillance associées à un système informatique.

Il n'existe donc aucune méthode satisfaisante dans l'état de la technique.

### EXPOSE DE L'INVENTION

L'invention vise à remédier à tout ou partie des inconvénients de l'état de la technique identifiés ci-dessus, et notamment à proposer des moyens pour permettre de disposer de mesures de consommation électrique cohérentes fréquentes sans perturber les composants dont on mesure la consommation électrique. Cela est réalisé en utilisant un microprocesseur de maintenance, que comporte la plupart des cartes électroniques utilisées dans le domaine des serveurs et en particulier dans le domaine des serveurs pour calcul à hautes performances. Un tel processeur de maintenance est associé à un bus I2C (Inter Integrated Circuit, pour Entre Circuits Intégrés), dans sa version 4.0 en 2012, qui permet de le connecter à différents composants de la carte électronique. Dans l'invention pour chaque composant, ou partie de composant dont on souhaite mesurer la consommation électrique, on installe un composant de mesure qui est connecté au bus I2C de la carte. L'interrogation de ces composants de mesure est alors réalisée selon des étapes qui minimisent l'impact des mesures sur le bus I2C et permet d'obtenir des mesures temporellement cohérentes.
Dans ce dessein, un aspect de l'invention se rapporte à un procédé de mesure d'une puissance consommée par une pluralité de composants électronique d'une carte électronique caractérisé en ce qu'il comporte les étapes suivantes :
- Association d'une liste de composants électroniques à un processus de lecture,
- Le processus de lecture attend pendant une période prédéterminée puis réalise un cycle de lecture, le cycle de lecture comportant les étapes suivantes :
- Test d'existence d'une lecture en cours,
   - Si une lecture de consommation par un autre processus est en cours, alors attente,
   - Sinon poursuite,
- Verrouillage d'un accès en lecture à au moins une mémoire d'entrepôt associée à au moins un composant électronique associé au processus de lecture,
- Acquisition des valeurs : pour chaque composant électronique de la liste de composants électroniques
   - Lecture de la consommation du composant électronique et enregistrement de la valeur lue dans une mémoire cache de consommation associée au composant électronique,
   - Enregistrement d'une date de lecture dans une deuxième mémoire dans une mémoire cache de date de lecture associée au composant électronique,
- Mise à disposition des valeurs : pour chaque composant électronique de la liste de composants électroniques
   - Lecture de la mémoire cache de consommation associée au composant électronique,
   - Lecture de la mémoire cache de date de lecture associé au composant électronique
   - Production et enregistrement d'au moins une valeur dans une mémoire d'entrepôt associé au composant électronique,
- Déverrouillage d'au moins la mémoire verrouillée à l'étape de verrouillage.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- la lecture de la consommation du composant électronique se fait par l'interrogation d'un composant électronique dédié à la surveillance de la consommation de composant électronique,
- l'enregistrement de la date de lecture se fait par l'enregistrement d'une date de début de lecture et par l'enregistrement d'une date de fin de lecture,
- la production et l'enregistrement d'au moins une valeur comporte une étape de production et d'enregistrement d'une date de mesure qui est la moyenne de la date de début de lecture et de la date de fin de lecture,
- la production et l'enregistrement d'au moins une valeur comporte une étape de production et d'enregistrement d'extremums de puissance,
- la production et l'enregistrement d'au moins une valeur comporte une étape de production et d'enregistrement d'une intégrale de la puissance consommé,

L'invention se rapporte également à un dispositif de stockage numérique comportant un fichier correspondant à des codes instructions mettant en oeuvre le procédé selon l'une des caractéristiques précédentes.

L'invention se rapporte également à un dispositif mettant en oeuvre le procédé selon l'une des caractéristiques précédentes

### BREVE DESCRIPTION DES FIGURES

D'autres caractéristiques et avantages de l'invention ressortiront à la lecture de la description qui suit, en référence aux figures annexées, qui illustrent :
- la figure 1, une illustration d'une infrastructure sur laquelle l'invention est mise en oeuvre,
- la figure 2, une illustration d'étapes du procédé selon l'invention.

Pour plus de clarté, les éléments identiques ou similaires sont repérés par des signes de référence identiques sur l'ensemble des figures.

L'invention sera mieux comprise par la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

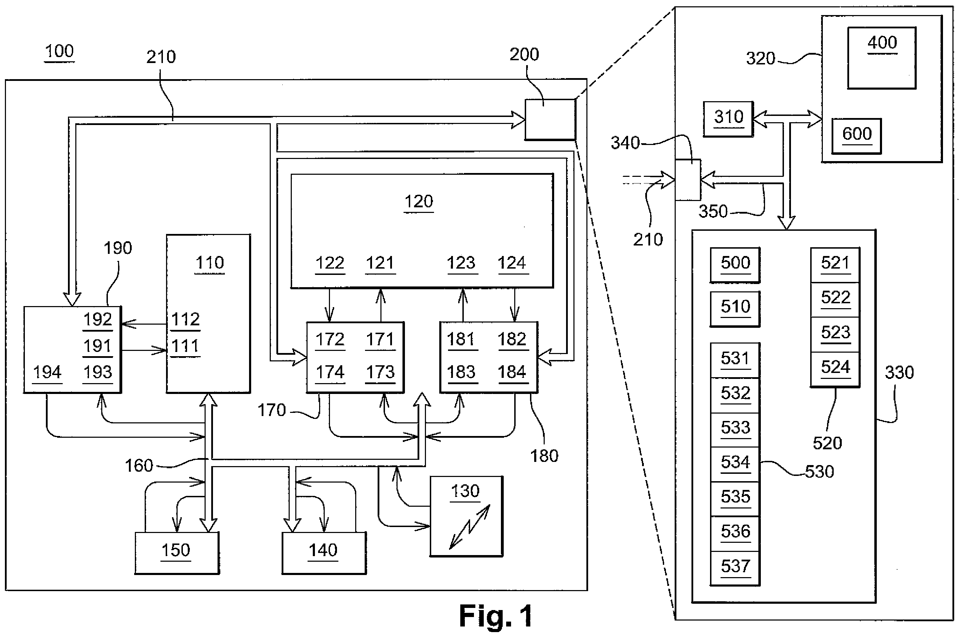

La figure 1 montre une carte 100 électronique comportant une pluralité de composants électroniques. Parmi les composants électroniques de la carte 100 nous ne décrirons que ceux le plus directement impliqués dans la mise en oeuvre de l'invention.

La figure 1 montre que la carte 100 comporte :
- une mémoire 110 vive,
- un premier microprocesseur 120 de traitement,
- un bloc 130 alimentation,
- une mémoire 140 de stockage,
- une interface 150 de communication.

La figure 1 montre que les composants :
- une mémoire 110 vive,
- un premier microprocesseur 120 de traitement,
- un bloc 130 alimentation,
- une mémoire 140 de stockage,
- une interface 150 de communication.
sont interconnectés par un bus 160.

Un bus est un ensemble de fils et/ou de pistes conduisant des signaux numériques et/ou analogiques de données et des signaux de puissances entre différents composants d'une carte électronique.

La figure 1 montre que, le premier microprocesseur 120 de traitement étant un processeur multi-coeur, chaque coeur a sa connexion d'alimentation. Un premier coeur du processeur 120 de traitement comporte une première entrée 121 de puissance, une première sortie 122 de puissance, une deuxième entrée 123 de puissance et une deuxième sortie 124 de puissance.

La première entrée 121 de puissance du premier microprocesseur 120 est connectée à une première sortie 171 de puissance d'un premier composant 170 de mesure. La première sortie 122 de puissance du premier microprocesseur 120 est connectée à une première entrée 172 de puissance du premier composant 170 de mesure. Une deuxième entrée 173 de puissance du premier composant 170 de mesure est connectée à une piste d'entrée de puissance du bus 160. Une deuxième sortie 174 de puissance du premier composant 170 de mesure est connectée à une piste de sortie de puissance du bus 160.

La deuxième entrée 123 de puissance du premier microprocesseur 120 est connectée à une première sortie 181 de puissance d'un deuxième composant 180 de mesure. La deuxième sortie 124 de puissance du premier microprocesseur 120 est connectée à une première entrée 182 de puissance du deuxième composant 180 de mesure. Une deuxième entrée 183 de puissance du deuxième composant 180 de mesure est connectée à une piste d'entrée de puissance du bus 160. Une deuxième sortie 184 de puissance du deuxième composant 180 de mesure est connectée à une piste de sortie de puissance du bus 160.

La figure 1 montre que la mémoire 110 vive comporte une entrée 111 de puissance et une sortie 112 de puissance.

L'entrée 111 de puissance de la mémoire 110 vive est connectée à une première sortie 191 de puissance d'un troisième composant 190 de mesure. La sortie 112 de puissance de la mémoire 110 vive est connectée à une première entrée 192 de puissance du troisième composant 190 de mesure. Une deuxième entrée 193 de puissance du troisième composant 190 de mesure est connectée à la piste d'entrée de puissance du bus 160. Une deuxième sortie 194 de puissance du troisième composant 190 de mesure est connectée à la piste de sortie de puissance du bus 160.

La figure 1 illustre également que l'interface 150, la mémoire 140 de stockage et le bloc 130 d'alimentation sont directement connectés au bus 160 sans l'intermédiaire d'un composant de mesure.

La figure 1 montre que la carte 100 électronique comporte un deuxième microprocesseur 200. Le deuxième microprocesseur 200 est connecté, par un deuxième bus 210 à :
- Le premier composant 170 de mesure,
- Le deuxième composant 180 de mesure,
- Le troisième composant 190 de mesure.

Le deuxième bus 210 est, par exemple, un bus de type I2C tel que précédemment cité. Le deuxième microprocesseur 200 est, par exemple, d'un type microcontrôleur comportant :
- Une unité 310 de traitement logique,
- De la mémoire 320 de stockage pour des codes instructions et de données,
- De la mémoire 330 de travail,
- Des interfaces 340 de communications avec d'autres composants, par exemple pour émettre et recevoir des messages de communications. Les interfaces 340 permettent au moins la connexion avec le premier bus 210 est avec d'autres connecteurs non représentés.

Les éléments du deuxième microprocesseur 200 sont à leur tour interconnecté par un deuxième bus 350.

C'est le deuxième microprocesseur 200 qui met en oeuvre un processus de lecture selon l'invention. Le processus de lecture a pour objectif de mettre à jour de manière cohérente des valeurs de consommation de composants. Ces valeurs de consommations mises à jour peuvent alors être utilisées par d'autres processus.

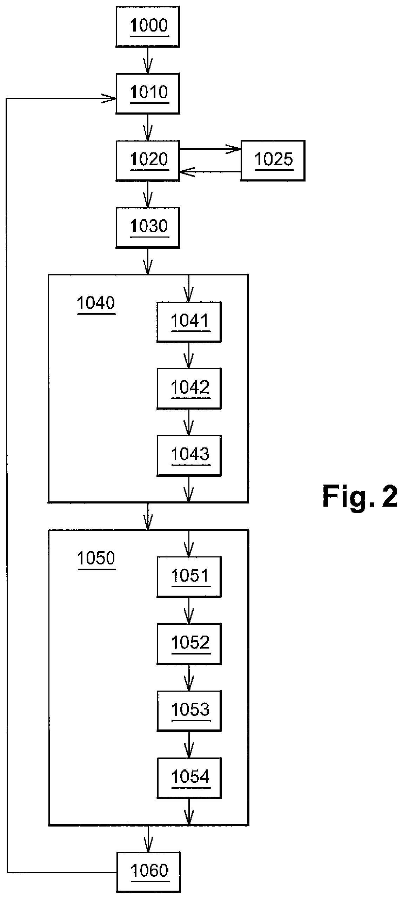

La figure 2 montre une étape 1000 d'association d'une liste de composants électroniques à un processus de lecture. Cela est réalisé, par exemple, par un paramètre de lancement du processus. On fournit par exemple au processus le nom d'un fichier qui comporte une liste d'identifiants de composant électronique et la fréquence de mesures souhaitée. Dans l'invention un tel identifiant est, par exemple, une adresse du composant sur un bus auquel il est connecté. Dans l'invention il s'agit du bus 210. Il pourrait aussi s'agir d'un numéro de série du composant. Un tel fichier 400 est enregistré, par exemple, dans la mémoire 320 de stockage du deuxième microprocesseur.

Dans l'exemple représenté la liste des composants correspond à l'énumération des composants de mesure :
- Le premier composant 170 de mesure correspondant à un premier coeur du premier microprocesseur,
- Le deuxième composant 180 de mesure correspondant à un deuxième coeur du premier microprocesseur,
- Le troisième composant 190 de mesure correspondant à un composant de mémoire vive.

De manière classique une lame de calcul comporte deux microprocesseurs et quatre composants mémoire. Chaque processeurs comportant deux coeurs. Cela représente 5 composants de mesures supplémentaires, par rapport à l'exemple de la figure 1, ce qui ferait une liste de composants comportant en tout 8 identifiants de composants de mesure. Il ne s'agit là que d'exemples non limitatifs. L'invention reste valable avec une carte comportant, toujours par exemple, 4 microprocesseurs et/ou 6 composants mémoire. De même l'invention reste valable avec des microprocesseurs comportant 1, 4 ou 8 coeurs.

Une fois l'association réalisée, c'est-à-dire la liste d'identifiants de composant électronique chargée en mémoire, le processus de lecture réalise à une période prédéterminé, par exemple 300 ms, les étapes de mesures. Entre ces périodes, le processus effectue une étape 1010 d'attente dont il sort à chaque période. Cette étape d'attente permet de fixer une fréquence maximale à laquelle le processus réalise des cycles de lecture.

Lorsqu'il sort de l'étape 1010 le processus de lecture passe à une étape 1020 de test si une lecture de consommation par un autre processus est en cours. Ce test est réalisé par la lecture du contenu d'une zone mémoire dans la mémoire 330 de travail du microprocesseur 200.

Il s'agit d'un premier sémaphore 500 de lecture en cours. On peut considérer ce premier sémaphore 500 comme une valeur booléenne. Si elle vaut 1 alors une lecture des consommations est en cours par un processus autre que le processus de lecture, il ne faut donc pas mettre à jour les consommations pour maintenir la cohérence de la lecture en cours. Dans ce cas le processus de lecture passe dans une étape 1025 d'attente avant de revenir, après une période prédéterminée, à l'étape 1020 de test d'existence d'une lecture en cours.

Si la valeur booléenne vaut 0 alors il n'y a pas de lecture en cours et le processus de lecture passe à une étape 1030 de verrouillage des accès en lecture. Le verrouillage se fait, par exemple, par l'intermédiaire d'un deuxième sémaphore 510 de verrouillage implémenté correspondant à une zone de la mémoire 330 de travail. Comme précédemment ce sémaphore est équivalent à une valeur booléenne. Dans l'étape 1030 le processus de lecture affecte la valeur 1 au deuxième sémaphore. Des lors, toute demande de lecture par un autre processus que le processus de lecture sera empêchée jusqu'à ce que la valeur du deuxième sémaphore soit 0. Le fait que la valeur du deuxième sémaphore vaille 1 signifie qu'une acquisition est en cours et que si les valeurs étaient lues elles risqueraient de ne pas être cohérentes.

Le processus de lecture passe à une étape 1040 d'acquisition de valeurs pour chaque composant électronique de la liste de composants électronique chargé à l'étape 1000 d'association de composants électroniques.

Pour l'étape 1040 d'acquisition de valeurs, à chaque composant correspond un premier type de structure 520 dans la mémoire 330 de travail du deuxième microprocesseur 200. La structure 520 comporte, au moins, les champs suivants :
- un champ 521 identifiant d'un composant électronique,
- un champ 522 date de début de lecture,
- un champ 523 date de fin de lecture,
- un champ 524 valeur lue.

La première structure 520 est répétée autant de fois qu'il y a de composants associés au processus de lecture, à chaque composant électronique est associée sa structure 520 dans la mémoire 330 de travail du deuxième microprocesseur 200. A chaque champ d'une structure d'un type correspond une zone dans la mémoire 330 de travail du deuxième microprocesseur 200.

Dans l'étape 1040 d'acquisition de valeurs, pour chaque composant, le processus de lecture effectue les sous-étapes suivantes :
- Une étape 1041 d'enregistrement dans le champ 522 date de début de lecture de la date de début de lecture, c'est à dire la date de début de l'étape 1041,
- Une étape 1042 de lecture du composant identifié par le contenu du champ 521, cette étape consiste en l'émission d'un message, selon le protocole I2C, de lecture via le deuxième bus 210 de la carte 100 électronique, puis en l'enregistrement de la réponse au message de lecture dans le champ 524 de valeur lue
- Une étape 1043 d'enregistrement dans le champ 523 date de fin de lecture de la date de fin de lecture, c'est-à-dire de la date de la fin de l'étape 1042 de lecture du composant.

Dans un exemple de réalisation les dates sont des tampons temporels dont la précision est la nanoseconde. Cela permet effectivement de mesurer une différence entre les dates de début et de fin de lecture.

Le deuxième bus 210 n'est sollicité, par l'invention, que pendant l'étape 1040 d'acquisition. Cette étape est la plus courte possible. Les résultats de cette étape sont enregistrés dans des zones mémoires que l'on peut considérer comme des zones mémoires cache dans la mesure où c'est via ces zones mémoires que les autres étapes peuvent accéder aux mesures réalisées par les composants de mesure et lues à l'étape 1040 d'acquisition de mesures. De plus, entre deux acquisitions de deux composants de la liste de composants associée au processus de lecture, le processus de lecture n'effectue aucune opération autre que celles nécessaires aux acquisitions. Ainsi les acquisitions effectuées sont les plus cohérentes possibles.

De l'étape 1040 d'acquisition le processus de lecture passe à une étape 1050 de mise à disposition des valeurs acquises à l'étape précédente.

Les valeurs acquises sont mises à disposition, par exemple, via des structures en mémoires d'un deuxième type. Il y a autant de structures 530 du deuxième type en mémoire que de composants dans la liste des composants chargée à l'étape 1000 d'association de composants électroniques.

Une structure du deuxième type comporte, au moins, les champs suivants :
- Un champ 531 comportant un identifiant d'une structure du premier type ce qui permet d'associer la structure du deuxième type à un composant de mesure,
- Un champ 532 comportant une valeur de consommation électrique,
- Un champ 533 comportant une date de lecture.

Dans l'étape 1050 de mise à disposition des valeurs acquises, pour chaque composant le processus de lecture effectue les sous-étapes suivantes :
- Une étape 1051 de lecture du champ 524 valeur lue de la structure du premier type associée à la structure du deuxième type et enregistrement du résultat de la lecture dans le champ 532 valeur de consommation électrique,
- Une étape 1052 de lecture du champ 522 date de début de lecture et du champ 523 date de fin de lecture, on effectue alors la moyenne des deux valeurs lues et on enregistre le résultat dans le champ 533 date de lecture.

Dans une variante de l'invention l'étape 1052 d'enregistrement d'une date de lecture est suivie d'une étape 1053 de détermination et d'enregistrement d'extremums. A cette fin une structure du deuxième type comporte deux champs supplémentaires :
- Un champ 534 valeur maximum,
- Un champ 535 valeur minimum.

Dans l'étape 1053 de détermination et d'enregistrement d'extremums, la valeur lue à l'étape 1051 de lecture de la consommation est comparée aux valeurs des champs valeur maximum et valeur minimum pour déterminer si ces champs doivent être mis à jour. Si la valeur lue à l'étape 1051 de lecture est inférieure à la valeur contenue dans le champ valeur minimum, alors le champ valeur minimum est mis à jour par la valeur lue. Si la valeur lue à l'étape 1051 de lecture est supérieure à la valeur contenue dans le champ valeur maximum, alors le champ valeur maximum est mis à jour par la valeur lue.

Dans une autre variante de l'invention on calcule une intégrale de la puissance. Cela est réalisé dans une étape 1054 d'intégration. Pour ce faire, par exemple, une structure du deuxième type est étendue avec des champs :
- Champ 536 date de première lecture,
- Champ 537 intégrale de puissance.

Dans cette étape 1054 d'intégration on ajoute à la valeur du champ 537 intégrale la valeur lue à l'étape 1051 de lecture de valeur.

Il existe des façons plus fines de calculer des intégrales, par exemple par la méthode des trapèzes.

Les étapes des variantes permettent d'illustrer le fait que des calculs d'analyses ou de mises en forme sont réalisés après que toutes les mesures aient été effectuées. On conserve donc ainsi la cohérence temporelle des données lues.

Le fait que le processus soit mis en oeuvre sur un deuxième microprocesseur fait qu'il est hors OS et donc ne perturbe pas l'activité du premier microprocesseur. Les codes instructions correspondant au procédé sont enregistrés dans une zone 600 de la mémoire 320 de stockage du deuxième microprocesseur.

De l'étape 1050 de mise à disposition le procédé de lecture passe à une étape 1060 de déverrouillage dans laquelle le processus de lecture assigne la valeur 0 au deuxième sémaphore 510 indiquant ainsi qu'il libère l'accès aux données. Dès lors la lecture par d'autre processus, c'est-à-dire l'accès aux valeurs des champs des structures du deuxième type est possible. Ces autres processus accèdent à ces valeurs à des fins de surveillance et de remonter d'information vers des interfaces homme-machine.

De l'étape 1060 de déverrouillage, le processus de lecture passe à l'étape 1010 d'attente. La durée du cycle de lecture, c'est à dire des étapes d'acquisition et de mise à disposition est prise en compte, par déduction, dans la durée d'attente à l'étape 1020 d'attente. Pour ce faire on utilise, par exemple, une zone mémoire non représentée dans laquelle on enregistre la date de début de l'étape d'acquisition. Cette date peut aussi, dans un autre exemple, être assimilée à la date de lecture du premier composant traité. La différence entre la date courante et cette date donne la durée du cycle de lecture.

Dans le cas d'un serveur de calcul à plusieurs lames, il existe au moins un processus de lecture par lame de calcul. Les deuxièmes processeurs des lames de calcul communiquent alors avec un processeur de gestion du serveur qui synchronise les mesures et agrège les mesures de chaque lame du serveur.

Les étapes :
- 1020 test d'existence d'une lecture en cours,
- 1030 verrouillage, et
- 1060 déverrouillage,
ont pour objet la mise en oeuvre d'une exclusion mutuelle sur les données mises à disposition par le processus de lecture. La mise en oeuvre décrite n'est qu'un exemple de réalisation. Dans la pratique on utilise un verrou de mutuelle exclusion aussi appelé MUTEX. Une autre forme de réalisation serait d'implémenter l'accès aux données mise à disposition via une zone mémoire d'échange interprocessus protégée par un sémaphore MUTEX. Cela revient à protéger l'accès aux données en ne l'autorisant qu'au processus qui tient le sémaphore.

Cela revient, par exemple, à n'utiliser qu'un seul booléen, chaque processus testant la valeur du booléen :
- Si le booléen vaut 0 alors le processus passe le booléen à 1 et continue son traitement à la fin duquel il passe le booléen 0,
- Si le booléen vaut 1 alors le processus attend que le booléen passe à 0.

Dans ces exemples d'utilisation d'un booléen les rôles attribués aux valeurs 0 et 1 sont interchangeables, il s'agit d'un choix d'implémentation.

## Revendications

1. Procédé de mesure d'une puissance consommée par une pluralité de composants électroniques d'une carte électronique **caractérisé en ce qu'**il comporte les étapes suivantes :
- Association (1000) d'une liste de composants électroniques à un processus de lecture,
- Le processus de lecture attend (1010) pendant une période prédéterminée puis réalise un cycle de lecture, le cycle de lecture comportant les étapes suivantes :
- Test (1020) d'existence d'une lecture en cours,
- Si une lecture de consommation par un autre processus est en cours, alors attente,
- Sinon poursuite,
- Verrouillage (1030) d'un accès en lecture à au moins une mémoire d'entrepôt associée à au moins un composant électronique associé au processus de lecture,
- Acquisition (1040) des valeurs : pour chaque composant électronique de la liste de composants électroniques
- Lecture (1042) de la consommation du composant électronique et enregistrement de la valeur lue dans une mémoire cache de consommation associée au composant électronique,
- Enregistrement (1041, 1043) d'une date de lecture dans une deuxième mémoire dans une mémoire cache de date de lecture associée au composant électronique,
- Mise à disposition (1050) des valeurs : pour chaque composant électronique de la liste de composants électroniques
- Lecture (1051) de la mémoire cache de consommation associée au composant électronique,
- Lecture (1052) de la mémoire cache de date de lecture associée au composant électronique
- Production et enregistrement (1051) d'au moins une valeur dans une mémoire d'entrepôt associée au composant électronique,
- Déverrouillage (1060) d'au moins la mémoire verrouillée à l'étape de verrouillage.

2. Procédé selon la revendication 1, **caractérisé en ce que** la lecture de la consommation du composant électronique se fait par l'interrogation d'un composant (170, 180, 190) électronique dédié à la surveillance de la consommation de composant électronique.

3. Procédé selon l'une des revendications précédentes, **caractérisé en ce que** l'enregistrement de la date de lecture se fait par l'enregistrement (1041, 1043) d'une date de début de lecture et par l'enregistrement d'une date de fin de lecture.

4. Procédé selon la revendication 3 précédente, **caractérisé en ce que** la production et l'enregistrement d'au moins une valeur comporte une étape de production et d'enregistrement (1052) d'une date de mesure qui est la moyenne de la date de début de lecture et de la date de fin de lecture.

5. Procédé selon l'une des revendications précédentes **caractérisé en ce que** la production et l'enregistrement d'au moins une valeur comporte une étape de production et d'enregistrement (1053) d'extremums de puissance.

6. Procédé selon l'une des revendications précédentes **caractérisé en ce que** la production et l'enregistrement d'au moins une valeur comporte une étape de production et d'enregistrement (1054) d'une intégrale de la puissance consommée.

7. Dispositif (320) de stockage numérique comportant un fichier correspondant à des codes instructions mettant en oeuvre le procédé selon l'une des revendications précédentes.

8. Dispositif (100, 200) mettant en oeuvre le procédé selon l'une des revendications 1 à 6.

## Patentansprüche

1. Messverfahren einer von einer Vielzahl von elektronischen Bauteilen einer elektronischen Karte konsumierten Leistung, **dadurch gekennzeichnet, dass** es die folgenden Schritte umfasst:
- Zuordnung (100) einer Liste von elektronischen Bauteilen zu einem Leseprozess;
- Der Leseprozess wartet (1010) während eines vorbestimmten Zeitraums, realisiert dann einen Lesezyklus, wobei der Lesezyklus die folgenden Schritte umfasst:
∘ Test (1020) über das Vorhandensein eines ausstehenden Lesevorgangs,
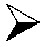 Wenn ein Konsumlesen durch einen anderen Prozess ausstehend ist, dann Warten,
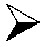 Andernfalls fortfahren,
∘ Verriegelung (1030) eines Lesezugangs zu wenigstens einem Lagerspeicher, der wenigstens einem elektronischen Bauteil zugeordnet ist, der dem Leseprozess zugeordnet ist;
∘ Erwerb (1040) der Werte: für jeden elektronischen Bauteil der Liste elektronischer Bauteile
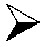 Lesen (1042) des Konsums des elektronischen Bauteils und Speichern des in einem dem elektronischen Bauteil zugeordneten Cache-Speicher gelesenen Wertes,
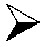 Speichern (1041, 1043) eines Lesedatums in einem zweiten Speicher in einem Lesedatums-Cache-Speicher, der dem elektronischen Bauteil zugeordnet ist.
∘ Bereitstellung (1050) der Werte: für jeden elektronischen Bauteil der Liste elektronischer Bauteile
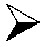 Lesen (1051) des Konsum-Cache-Speichers, der dem elektronischen Bauteil zugeordnet ist,
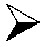 Lesen (1052) des Lesedatums-Cache-Speichers, der dem elektronischen Bauteil zugeordnet ist,
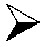 Produktion und Abspeichern (1051) wenigstens eines Wertes in einem Lagerspeicher, der dem elektronischen Bauteil zugeordnet ist,
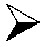 Entriegelung (1060) wenigstens des in dem Verriegelungsschritt verriegelten Speicher.

2. Verfahren gemäß Anspruch 1, **dadurch gekennzeichnet, dass** das Lesen des Konsums des elektronischen Bauteils per Abfragen eines elektronischen Bauteils (170, 180, 190) erfolgt, das zur Überwachung des Konsums des elektronischen Bauteils dediziert ist.

3. Verfahren gemäß einem der voranstehenden Ansprüche, **dadurch gekennzeichnet, dass** das Abspeichern des Lesedatums per Abspeichern (1041, 1043) eines Leseanfangsdatums und per Abspeichern eines Leseenddatums erfolgt.

4. Verfahren gemäß dem voranstehenden Anspruch 3, **dadurch gekennzeichnet, dass** die Produktion und das Abspeichern wenigstens eines Wertes einen Produktions- und Abspeicherschritt (1052) eines Messdatums umfasst, das das Mittel des Leseanfangsdatums und des Leseenddatums ist.

5. Verfahren gemäß einem der voranstehenden Ansprüche, **dadurch gekennzeichnet, dass** die Produktion und das Abspeichern wenigstens eines Wertes einen Produktions- und Abspeicherschritt (1053) von Leistungsextremwerten umfasst.

6. Verfahren gemäß einem der voranstehenden Ansprüche, **dadurch gekennzeichnet, dass** die Produktion und das Abspeichern wenigstens eines Wertes einen Produktions- und Abspeicherschritt (1054) einer ganzen Zahl der konsumierten Leistung umfasst.

7. Digitale Speichervorrichtung (320), umfassend eine Datei, die Anweisungscodes entspricht, die das Verfahren gemäß einem der voranstehenden Ansprüche umsetzt.

8. Vorrichtung (100, 200), die das Verfahren gemäß einem der Ansprüche 1 bis 6 umsetzt.

## Claims

1. Method for measuring the power consumed by a plurality of electronic components of an electronic card **characterised in that** it comprises the following steps:
- Associating (1000) a list of electronic components with a reading process,
- The reading process waits (1010) for a predetermined period of time then carries out a read cycle, with the read cycle comprising the following steps:
∘ Test (1020) of the existence of a read in progress,
▪ If a consumption read by another process is in progress, then wait,
▪ Otherwise continue,
∘ Locking (1030) of a read access to at least one warehouse memory associated with at least one electronic component associated with the reading process,
∘ Acquisition (1040) of values: for each electronic component of the list of electronic components
▪ Reading (1042) of the consumption of the electronic component and recording of the value read in a consumption cache memory associated with the electronic component,
▪ Recording (1041, 1043) of a read date in a second memory in a read date cache memory associated with the electronic component,
∘ Making available (1050) of values: for each electronic component of the list of electronic components
▪ Reading (1051) of the consumption cache memory associated with the electronic component,
▪ Reading (1052) of the read date cache memory associated with the electronic component
▪ Production and recording (1051) of at least one value in a warehouse memory associated with the electronic component,
∘ Unlocking (1060) of at least the memory locked in the step of locking.

2. Method according to claim 1, **characterised in that** the reading of the consumption of the electronic component is done by interrogating an electronic component (170, 180, 190) dedicated to monitoring the consumption of the electronic component.

3. Method according to one of the preceding claims, **characterised in that** the recording of the read date is done via the recording (1041, 1043) of a read start date and via the recording of a read end date.

4. Method according to the preceding claim 3, **characterised in that** the production and the recording of at least one value comprises a step of production and of recording (1052) of a measurement date which is the average of the read start date and the read end date.

5. Method according to one of the preceding claims **characterised in that** the production and the recording of at least one value comprises a step of production and of recording (1053) of power extremums.

6. Method according to one of the preceding claims **characterised in that** the production and the recording of at least one value comprises a step of production and of recording (1054) of an integral of the power consumed.

7. Device (320) for digital storage comprising a file corresponding to instruction codes implementing the method according to one of the preceding claims.

8. Device (100, 200) implementing the method according to one of claims 1 to 6.
